# EUROPÄISCHE PATENTSCHRIFT

(11) **EP 2 016 155 B1**
(45) Veröffentlichungstag und Bekanntmachung des Hinweises auf die Patenterteilung: **28.07.2010**
(21) Anmeldenummer: 07723625.5
(22) Anmeldetag: 27.03.2007
(51) Int. Cl.: C09K 21/12, C09D 5/18, D06M 13/224, D06M 13/292, D06M 15/507

(54) **WASSERBASIERENDE FLAMMSCHUTZMITTELDISPERSIONEN**
WATER-BASED FLAME-STABILIZING DISPERSIONS
DISPERSIONS IGNIFUGES À BASE AQUEUSE

(30) Priorität: 26.04.2006 DE 102006019509
(43) Veröffentlichungstag der Anmeldung: 21.01.2009
(73) Patentinhaber: Clariant Finance (BVI) Limited, Road Town, Tortola (VG)
(72) Erfinder: MÜLLER, Olaf, 61462 Königstein (DE); MÜNKEL, Albert, 65835 Liederbach (DE); FECHNER, Björn, 65817 Eppstein (DE)
(74) Vertreter: Hütter, Klaus
(86) Internationale Anmeldenummer: PCT/EP2007/002679
(87) Internationale Veröffentlichungsnummer: WO 2007/124819

(56) Entgegenhaltungen:
- EP-A2- 0 582 928
- DE-A1- 4 128 638
- DE-A1-102004 059 221
- US-A- 4 220 472
- US-A1- 2003 193 045

## Beschreibung

Gegenstand der vorliegenden Erfindung sind wasserbasierende Flammschutzmittelpräparationen der Dioxaphosphorinane, Verfahren zu ihrer Herstellung, ihre Verwendung zur Flammschutzausrüstung von natürlichen, cellulosischen und synthetischen Fasermaterialien.

Um eine zufrieden stellende Flammschutzausrüstung von Viskosefasern zu erzielen, müssen die verwendeten Flammschutzmittel hohen Anforderungen genügen, insbesondere im Hinblick auf Reinheit, Partikelfeinheit, Lagerstabilität, Rekristallisationsbeständigkeit, Viskosität, Oberflächenspannung und Leitfähigkeit. Insbesondere werden sehr hohe Anforderungen an die Partikelfeinheit und Stabilität gestellt, damit es beim Spinnprozess von hochwertigen fein- bis feinsttitrigen Viskosefasern nicht zu Faser- und Filamentbrüchen, Titerschwankungen, Schwankungen der Faserfeinheit, Festigkeitsverlusten oder zu Düsenverstopfungen kommt, welche eine schlechtere Qualität des Endprodukts verursachen.

Bislang bekannte Flammschutzmittelpräparationen, wie z.B. in DE-41 28 638 A1 beschrieben, erfüllen oftmals nicht mehr die von der Viskoseindustrie gestellten Anforderungen, da sie Defizite in der Feinverteilung und der Temperatur- und Lagerstabilität, insbesondere bei der Rekristallisationsbeständigkeit, aufweisen oder hinsichtlich der Ökologie nicht mehr den heutigen Anforderungen genügen.

In der US 4 220 472 A werden spezielle Dioxaphosphiran-Derivate als Flammschutzmittel beschrieben.

In der US2003/0193045 A1 werden Phosphirangruppenhaltige Biphenyle als Flammschutzmittel beschrieben.

Die DE 102004059221A1 offenbart Dioxaphosphirane, dispergiert in Wasser und einem Acrylatropolymer, als Flammschutzmittel Dispersion.

Es bestand daher die Aufgabe, Flammschutzmittelpräparationen zur Verfügung zu stellen, die die vorstehend genannten Anforderungen hinsichtlich Feinverteilung, Temperatur- und Lagerstabilität, Rekristallisationsbeständigkeit, sehr guter Verspinnbarkeit ohne signifikante Reduzierung der Faserfestigkeiten und Filterstandszeiten, sowie den heutigen ökologischen Anforderungen an das Dispergiermittel erfüllen. Diese Aufgabe konnte überraschenderweise durch eine Kombination aus einer speziellen Gruppe von Flammschutzmitteln und Dispergiermitteln gelöst werden.

Gegenstand der vorliegenden Erfindung ist eine wässrige Dispersion enthaltend
a) ein Flammschutzmittel der allgemeinen Formel (I) 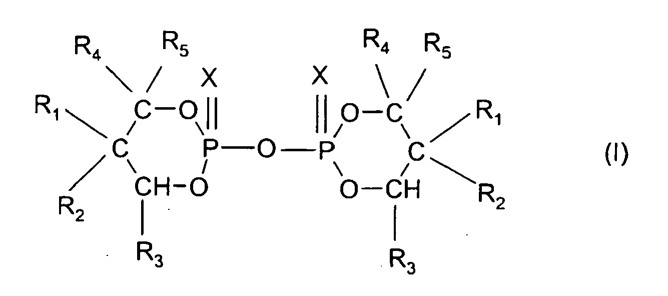 worin
   - R₁: Wasserstoff, C₁₋₄-Alkyl, -CH₂Cl, -CH₂Br, -CH₂O-C₁₋₄-Alkyl oder Phenyl,
   - R₂: Wasserstoff, C₁₋₄-Alkyl, -CH₂Cl, -CH₂Br oder -CH₂O-C₁₋₄-Alkyl, oder
   - R₁: und R₂ zusammen mit dem an sie gebundenen Ring-Kohlenstoffatom Cyclohexyliden, Cyclohexenyliden oder 3,4-Dibromcyclohexyliden,
   - R₃: und R₅ unabhängig voneinander Wasserstoff oder C₁₋₄-Alkyl,
   - R₄: Wasserstoff oder Methyl und
   - X: Sauerstoff oder Schwefel bedeuten,
b) ein Dispergiermittel aus der Gruppe der Rizinusölalkoxylester, Ricinolsäurealkoxylester, der nichtionischen Oligo- oder Polyester aus aromatischen Dicarbonsäuren, C₂-C₈-Alkylen-diolen und Poly(C₁-C₄-alkylen)glykolen und/oder Methylpoly(C₂-C₄-alkylen)glykolen, oder einer Kombination dieser nichtionischen Oligo- oder Polyester mit Dialkylsulfosuccinaten
   und
c) gegebenenfalls ein Retentionsmittel.

Flammschutzmittel der allgemeinen Formel (I) sind an sich aus der DE 41 28 638 A1 bekannt.

Bevorzugt sind solche Flammschutzmittel der Formel (I), worin die R₁-Reste Methyl, Ethyl, Propyl, Chlormethyl, Brommethyl oder Phenyl bedeuten. Bevorzugt sind weiterhin solche Flammschutzmittel der Formel (I), worin die R₂-Reste Methyl, Ethyl, Propyl, Chlormethyl oder Brommethyl bedeuten.

Besonders bevorzugt sind Flammschutzmittel der Formel (la)

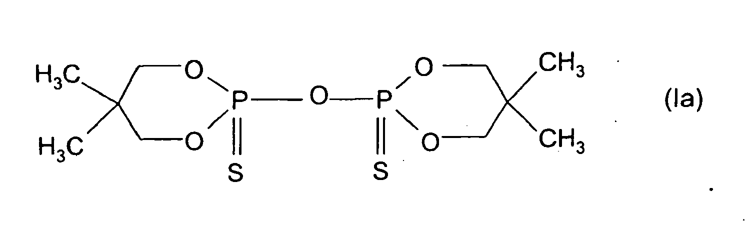

Dispergiermittel aus der Gruppe der Rizinusölalkoxylester und Ricinolsäurealkoxylester sind aus der EP-B1-0 582 928 bekannt.

Das dem Rizinusölalkoxylester zugrunde liegende Rizinusöl ist vorzugsweise handelsübliches Rizinusöl, bestehend im Wesentlichen aus einem Glyzerid der Ricinolsäure, Ölsäure, Linolsäure und Stearinsäure. Es enthält freie Hydroxylgruppen und olefinische Doppelbindungen.

Ricinolsäure enthält eine olefinische Doppelbindung und eine freie alkoholische OH-Gruppe.

Rizinusölalkoxylester und Ricinolsäurealkoxylester sind meist mit 1 bis 100, vorzugsweise 5 bis 50, Alkoxyresten verestert und/oder verethert. Alkoxy bedeutet bevorzugt Ethoxy, 1,2-Propoxy, 2,3-Propoxy oder eine Kombination davon. Sowohl der Rizinusölalkoxylester als auch der Ricinolsäurealkoxylester können mit weiteren Säureresten aus der Gruppe der Harzsäuren, C₂-C₁₂-Dicarbonsäuren, C₂-C₁₂-Sulfodicarbonsäuren oder Fettsäuren verestert sein. Harzsäuren sind beispielsweise Abietinsäuren sowie handelsübliche Kolophoniumarten. C₂-C₁₂-Dicarbonsäuren und C₂-C₁₂-Sulfodicarbonsäuren sind beispielsweise Maleinsäure und Sulfobernsteinsäure.

Dispergiermittel aus der Gruppe der nichtionischen Oligo- oder Polyester sind erhältlich durch Polykondensation von Dicarbonsäure- und Glykolkomponenten, umfassend
(I) eine oder mehrere aromatische Dicarbonsäuren, deren Ester oder Anhydride;
(II) C₂-C₈-Alkylen-diole;
(III) Poly(C₁-C₄-alkylen)glykole und/oder Methylpoly(C₂-C₄-alkylen)glykole;
(IV) gegebenenfalls wasserlösliche Anlagerungsprodukte von Alkylenoxid an C₁-C₂₄-Alkohole, an C₆-C₁₈-Alkylphenole oder an C₈-C₂₄-Alkylamine; und (V) gegebenenfalls ein oder mehrere Polyole.

Bevorzugte Dispergiermittel aus der Gruppe der nichtionischen Oligo- oder Polyester sind erhältlich durch Polykondensation von
(I) 10 bis 50 Gew.-%, insbesondere 15 bis 30 Gew.-%, einer oder mehrerer aromatischer Dicarbonsäuren, deren Ester oder Anhydride;
(II) 2 bis 50 Gew.-%, insbesondere 5 bis 45 Gew.-%, C₂-C₈-Alkylen-diole;
(III) 3 bis 80 Gew.-%, insbesondere 5 bis 75 Gew.-%, Poly(C₁-C₄-alkylen)glykole und/oder Methylpoly(C₂-C₄-alkylen)glykole;
(IV) 0 bis 10 Gew.-% eines wasserlöslichen Anlagerungsproduktes von Alkylenoxid an C₁-C₂₄-Alkohole, an C₆-C₁₈-Alkylphenole oder an C₈-C₂₄-Alkylamine und
(V) 0 bis 10 Gew.-% eines oder mehrerer Polyole,
   jeweils bezogen auf das Gesamtgewicht des Oligo- oder Polyesters. Bevorzugte nichtionische Oligo- oder Polyester entsprechen der Formel (2), 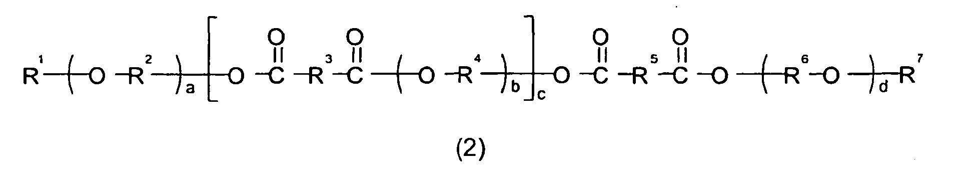 worin
   - R¹ und R⁷: ein linearer oder verzweigter C₁-C₈-Alkylrest bedeutet,
   - R², R⁴, R⁶: unabhängig voneinander (C₁-C₈)-Alkylen,
   - R³ und R⁵: Arylen oder Alkarylen, a, b und d jeweils eine Zahl zwischen 1 und 200 ist, wobei die Summe von a, b
   und d mindestens 5 ist,
   - c: eine Zahl zwischen 1 und 20 ist.

Besonders bevorzugt sind Dispergiermittel der Formel (2), dadurch gekennzeichnet, dass
- R¹ und R⁷: Methyl und/oder Ethyl,
- R², R⁴, R⁶: Ethylen, 1,2-Propylen, 2,3-Propylen oder deren Gemische,
- R³ und R⁵: 1,4-Phenylen und 1,3-Phenylen,
- a, b und d: eine Zahl zwischen 1 und 100, wobei die Summe von a, b und d
mindestens 5 ist;
- c: eine Zahl zwischen 1 und 10 bedeuten.

Dialkylsulfosuccinate sind beispielsweise Natrium-2-diethylhexylsulfosuccinat, Natrium-2-dioctylsulfosuccinat und Kalium-2-didodecylsulfosuccinat.

Die erfindungsgemäßen Dispersionen enthalten zweckmäßigerweise 5 bis 50 Gew.-% eines Flammschutzmittels gemäß (a); 0,3 bis 20 Gew.-% an Dispergiermittel gemäß (b) gegebenenfalls in Kombination mit 0,01 bis 5 Gew.-% eines Dialkylsulfosuccinats; 0 bis 15 Gew.-% Retentionsmittel gemäß (c), Rest Wasser, jeweils bezogen auf das Gesamtgewicht der Dispersion.

Bevorzugte Dispersionen enthalten
a) 5 bis 50 Gew.-%, vorzugsweise 10 bis 45 Gew.-%, Flammschutzmittel der Formel (I),
b1) 1 bis 15 Gew.-%, vorzugsweise 3 bis 10 Gew.-%, eines Dispergiermittels aus der Gruppe der Rizinusölalkoxylester und Ricinolsäurealkoxylester,
   oder
b2) 1 bis 15 Gew.-%, vorzugsweise 4 bis 13 Gew.-%, eines Dispergiermittels aus der Gruppe der nichtionischen Oligo- oder Polyester aus aromatischen Dicarbonsäuren, C₂-C₈-Alkylen-diolen und Poly(C₁-C₄-alkylen)glykolen
   und/oder Methylpoly(C₂-C₄-alkylen)glykolen, gegebenenfalls in Kombination mit 0,05 bis 3 Gew.-% eines Dialkylsulfosuccinats,
c) 0 bis 15 Gew.-%, vorzugsweise 2 bis 10 Gew.-%, eines Retentionsmittels,
d) 5 bis 80 Gew.-%, vorzugsweise 10 bis 60 Gew.-%, Wasser,
e) 0 bis 10 Gew.-%, vorzugsweise 0,5 bis 10 Gew.-%, weiterer üblicher Zusatzstoffe,
   jeweils bezogen auf das Gesamtgewicht der Dispersion.

Retentionsmittel werden eingesetzt als Wasserrückhaltemittel zur Verbesserung der Eintrocknungsbeständigkeit und der Froststabilität. Es handelt sich hierbei um höher siedende Lösemittel wie mehrwertige Alkohole, Polyole, Glykolether, Säureamide oder Zuckerderivate, wie beispielsweise Ethylenglykol, Diethylenglykol, Triethylenglykol, niedermolekulare Polyethylenglykole und/oder deren Ether, Propylenglykole, Dipropylenglykole, niedermolekulare Propylenglykole und/oder deren Ether, Butylenglykole, Hexylenglykole, Glyzerin, Diglyzerin, Pentaerythrit oder Formamid.

Weitere übliche Zusatzstoffe sind beispielsweise Entschäumer, Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit, sowie Amine, wie z.B. Ethanolamin, Diethanolamin, Triethanolamin, N,N-Dimethylethanolamin oder Diisopropylamin, oder Natronlauge, die hauptsächlich zur Erhöhung des pH-Wertes der Flammschutzmittelpräparation dienen.

Gegenstand der vorliegenden Erfindung ist auch ein Verfahren zur Herstellung der erfindungsgemäßen Dispersionen, dadurch gekennzeichnet, dass man das Flammschutzmittel zusammen mit dem Dispergiermittel mit Hilfe eines Dispergieraggregates, vorzugsweise einer Rührwerkskugelmühle, die insbesondere mit einer Rührwerksumfangsgeschwindigkeit von über 12 m/s betrieben wird, und unter Einwirkung von nichtmetallischen Mahlkörpern vom Durchmesser kleiner oder gleich 1 mm, in Gegenwart von Wasser fein verteilt. Die übrigen Zusatzstoffe können bei der Feinverteilung zugegen sein und/oder anschließend zugegeben werden.

Es kann auch eine gewöhnliche Rührwerkskugelmühle eingesetzt werden, jedoch muss eine gröbere Korngrößenverteilung sowie eine längere Verarbeitungszeit in Kauf genommen werden.

Gegenstand der Erfindung ist auch die Verwendung der erfindungsgemäßen Dispersion zur Masseflammschutzausrüstung oder Oberflächenbehandlung von cellulosischen Materialien, wie Stapelfasern, Filamenten, Monofilen, Non wovens, Wursthüllen, Cellophan, Kombinationen aus cellulosischen und/oder tierischen, pflanzlichen und/oder synthetischen Fasern, sowie pflanzlichen, tierischen oder synthetischen Fasern, insbesondere zum Ausrüsten von Celluloseregenerat und Celluloseacetat.

Die regenerierte Cellulose, insbesondere Xanthogenat, wird in gelöster Form, z.B. vor dem Verspinnen, mit der erfindungsgemäßen Dispersion vermischt. Das Mischungsverhältnis ist im Allgemeinen zwischen 10 und 40 Teilen der erfindungsgemäßen Dispersion pro 100 Teile reiner regenerierter Cellulose.

Die erfindungsgemäßen Dispersionen können auch in Kombination mit Pigmenten, Pigmentpräparationen und/oder Farbstoffen eingesetzt werden. Die Zugabe erfolgt wie vorstehend beschrieben zur Spinnfärbung mit gleichzeitiger Masseflammschutzausrüstung oder Oberflächenbehandlung von cellulosischen Materialien, wie Stapelfasern, Filamenten, Monofilen, Non wovens, Wursthüllen, Cellophan, Schwammtüchern (Mischungen bzw. Kombinationen aus cellulosischen und/oder tierischen, pflanzlichen und/oder synthetischen Fasern), sowie pflanzlichen, tierischen oder synthetischen Fasern.

Des weiteren sind die erfindungsgemäßen Präparationen geeignet zur Oberflächenbeschichtung oder zur Masseflammschutzausrüstung alleine oder in Kombination mit Farbmitteln, wie Pigmenten, Pigment-Präparationen und/oder Farbstoffen, für Schuhcreme, Kerzen, Wachsmalstifte, Knetmasse, Kosmetika, Anstrich- und Dispersionsfarben, Dispersionslacke, Druckfarben, beispielsweise Textildruck-, Flexodruck- oder Tiefdruckfarben, für Tapeten und Tapetenfarben, für Holzschutzsysteme, für Lacke, für Saatgut, für Glasflaschen, für die Massefärbung von Dachziegeln, für Putze, für Holzbeizen, für Papiermassen, für Buntstiftminen, Faserschreiber, Tuschen, Tinten, Pasten für Kugelschreiber, Kreiden, Wasch- und Reinigungsmittel, Schuhpflegemittel, Latex-Produkten, Schleifmitteln, sowie von Kunststoffen und hochmolekularen Materialien, sowie als Flammschutzmittel in elektrophotographischen Tonern und Entwicklern, wie z.B. Ein- oder Zweikomponentenpulvertonern, Magnettonern, Flüssigtonern, Polymerisationstonern sowie weiteren Spezialtonern, als Flammschutzmittel in Ink-Jet-Tinten.

Des weiteren sind die erfindungsgemäßen Präparationen geeignet zur Oberflächenbeschichtung oder zur Masseflammschutzausrüstung von Gegenständen aus beispielsweise Metall, Holz, Kunststoff, Glas, Keramik, Beton, Textilmaterial, Papier oder Kautschuk.

Als Farbmittel kommen organische und anorganische Pigmente sowie polymerlösliche, -teillösliche oder -unlösliche Farbstoffe in Betracht. Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Geeignete anorganische Pigmente sind beispielsweise Titandioxide, Zinksulfide, Eisenoxide, Chromoxide, Ultramarin, Nickel- oder Chromantimontitanoxide, Cobaltoxide, Mischoxide des Cobalts und Aluminiums, Bismutvanadate sowie Verschnittpigmente.

Als organische Farbstoffe kommen Säurefarbstoffe, Direktfarbstoffe, Schwefelfarbstoffe und deren Leukoform, Metallkomplexfarbstoffe, Küpenfarbstoffe, basische Farbstoffe oder Reaktivfarbstoffe in Betracht.

### Beispiele

In den nachstehenden Beispielen werden Dispergiermittel verwendet, welche wie folgt gekennzeichnet sind:
D1: Dispergiermittel aus der Gruppe der Rizinusölethoxylester nach Herstellungsbeispiel 16 a) aus EP-B-0 582 928, 50 %ige Lösung in Wasser.
D2: Oligo- und Polyester der Formel (2).
D3: Natrium-2-Diethylhexylsulfosuccinat.

### Beispiel 1

45 Teile Flammschutzmittel der Formel (la),
14 Teile D1,
0,8 Teile Konservierungsmittel,
   und 40,2 Teile Wasser werden mit einem Dissolver homogenisiert.

Im Anschluss wird die Suspension mit einer Rührwerkskugelmühle (Typ Getzmann Dispermat) mit Glasmahlkörpern, Durchmesser ∼1 mm, gemahlen. Die erhaltene Flammschutzmittel-Dispersion kann mit Wasser auf niedrigeren Wirkstoffgehalt eingestellt werden.

Die Flammschutzmitteldispersion besitzt eine niedrige Viskosität, ist schaumfrei, sedimentationsstabil und zeigt nur geringe Serumneigung. Sie ist viskositätsstabil, mit einer sehr guten Rekristallisationsstabilität bei Lagerung über mehrere Monate bei Raumtemperatur.

### Beispiel 2

Eine Präparation, enthaltend
40 Teile Flammschutzmittel der Formel (la),
12 Teile D1,
5,0 Teile alpha-Methyl-omega-Hydroxy-Polyethylenglykolether (Retentionsmittel),
0,8 Teile Konservierungsmittel,
42,2 Teile Wasser
   wird, wie in Beispiel 1 beschrieben, hergestellt.

### Beispiel 3

Eine Präparation, enthaltend
45 Teile Flammschutzmittel der Formel (la);
9,5 Teile D2 mit R¹ und R⁷ = Methyl, R² und R⁶ = Ethylen, R³ und R⁵ = 1,4-Phenylen, R⁴ = 1,2-Propylen, a, b und d ist in der Summe im Durchschnitt circa 35, c ist im Durchschnitt circa 2;
0,5 Teile D3;
0,8 Teile Konservierungsmittel;
44,2 Teile Wasser
   wird, wie in Beispiel 1 beschrieben, hergestellt.

### Beispiel 4

Eine Präparation, enthaltend
45 Teile Flammschutzmittel der Formel (la),
12 Teile Dispergiermittel aus der Gruppe der Rizinusölethoxylester nach Herstellungsbeispiel 8 a) aus EP-B-0 582 928, 50 %ige Lösung in Wasser, 0,8 Teile Konservierungsmittel,
   und 42,2 Teile Wasser wird, wie in Beispiel 1 beschrieben, hergestellt.

### Beispiel 5

Eine Präparation, enthaltend
45 Teile Flammschutzmittel der Formel (la),
12 Teile Dispergiermittel aus der Gruppe der Rizinusölethoxylester nach Herstellungsbeispiel 1b) aus EP-B- 0 582 928, 50 %ige Lösung in Wasser, 0,8 Teile Konservierungsmittel, und
42,2 Teile Wasser wird, wie in Beispiel 1 beschrieben, hergestellt.

### Beispiel 6

Eine Präparation, enthaltend
45 Teile Flammschutzmittel der Formel (la),
14 Teile Dispergiermittel aus der Gruppe der Rizinusölethoxylester nach Herstellungsbeispiel 5 b) aus EP-B- 0 582 928, 50 %ige Lösung in Wasser,
0,8 Teile Konservierungsmittel, und
40,2 Teile Wasser wird, wie in Beispiel 1 beschrieben, hergestellt.

### Anwendungsbeispiele

Eine gemäß einem der Beispiele 1 bis 6 hergestellte Dispersion wird 1:1 mit demineralisiertem Wasser unter Rühren gemischt. 8 Teile dieser Mischung werden unter Rühren in 100 Teile einer Cellulose-Xanthogenatlösung (α-Cellulosegehalt 8 %) eingebracht und durch Düsen in ein wässriges Fällungsbad, das pro Liter 125 g H₂SO₄, 240 g Na₂SO₄ (wasserfrei) und 12 g ZnSO₄ (wasserfrei) enthält, versponnen. Das so erhaltene Filament wird gründlich gewaschen, getrocknet, und zu einem Gewirke verarbeitet. Dieses Gewirke wird einem Entflammbarkeitstest (Methode Fenimorc und Martin, Modern Pastics, Nov. 1966, bzw. LOI-Wert-Bestimmung, ASTM D2863) unterworfen. Das unbehandelte Cellulose-Gewirke zeigt im Vergleich einen LOI-Wert von ca. 18, während das erfindungsgemäß behandelte Gewirke einen LOI-Wert zwischen 25 und 30 aufweist.

## Patentansprüche

1. Wässrige Dispersion enthaltend
a) ein Flammschutzmittel der allgemeinen Formel (I) 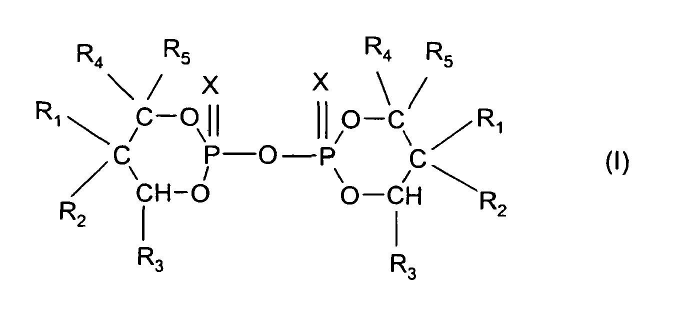 worin
R₁ Wasserstoff, C₁-₄-Alkyl, -CH₂Cl, -CH₂Br, -CH₂O-C₁₋₄-Alkyl oder Phenyl, R₂ Wasserstoff, C₁₋₄-Alkyl, -CH₂Cl, -CH₂Br oder -CH₂O-C₁₋₄-Alkyl, oder
R₁ und R₂ zusammen mit dem an sie gebundenen Ring-Kohlenstoffatom Cyclohexyliden, Cyclohexenyliden oder 3,4-Dibromcyclohexyliden,
R₃ und R₅ unabhängig voneinander Wasserstoff oder C₁₋₄-Alkyl,
R₄ Wasserstoff oder Methyl und
X Sauerstoff oder Schwefel bedeuten,
b) ein Dispergiermittel aus der Gruppe der Rizinusölalkoxylester, Ricinolsäurealkoxylester, der nichtionischen Oligo- oder Polyester aus aromatischen Dicarbonsäuren, C₂-C₈-Alkylen-diolen und Poly(C₁-C₄-alkylen)glykolen und/oder Methylpoly(C₂-C₄-alkylen)glykolen, oder einer Kombination dieser nichtionischen Oligo- oder Polyester mit Dialkylsulfosuccinaten
und
c) gegebenenfalls ein Retentionsmittel.

2. Dispersion nach Anspruch 1, **dadurch gekennzeichnet, dass** die R₁-Reste Methyl, Ethyl, Propyl, Chlormethyl, Brommethyl oder Phenyl bedeuten.

3. Dispersion nach Anspruch 1 oder 2, **dadurch gekennzeichnet, dass** die R₂-Reste Methyl, Ethyl, Propyl, Chlormethyl oder Brommethyl bedeuten.

4. Dispersion nach einem oder mehreren der Ansprüche 1 bis 3, **dadurch gekennzeichnet, dass** das Flammschutzmittel der Formel (Ia) entspricht

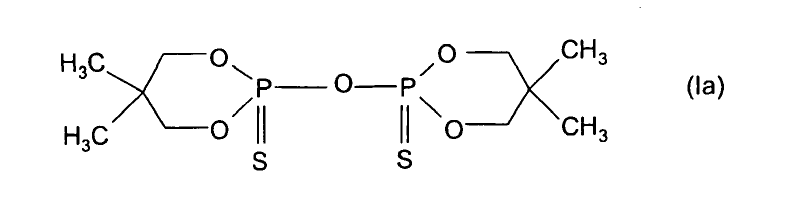

5. Dispersion nach einem oder mehreren der Ansprüche 1 bis 4, **dadurch gekennzeichnet, dass** das Dispergiermittel ein Rizinusölalkoxylester oder Ricinolsäurealkoxylester ist, der 1 bis 100 Alkoxyreste aus der Gruppe Ethoxy, 1,2-Propoxy und 2,3-Propoxy enthält.

6. Dispersion nach Anspruch 5, **dadurch gekennzeichnet, dass** der Rizinusölalkoxylester oder Ricinolsäurealkoxylester mit einem Säurerest aus der Gruppe der Harzsäuren, C₂-C₁₂-Dicarbonsäuren, C₂-C₁₂-Sulfodicarbonsäuren oder Fettsäuren verestert ist.

7. Dispersion nach einem oder mehreren der Ansprüche 1 bis 5, **dadurch gekennzeichnet, dass** das Dispergiermittel aus der Gruppe der nichtionischen Oligo- oder Polyester erhältlich ist durch Polykondensation von Dicarbonsäure- und Glykolkomponenten, umfassend eine oder mehrere aromatische Dicarbonsäuren, deren Ester oder Anhydride;
C₂-C₈-Alkylen-diole; Poly(C₁-C₄-alkylen)glykole und/oder Methylpoly(C₂-C₄-alkylen)glykole; gegebenenfalls wasserlösliche Anlagerungsprodukte von Alkylenoxid an C₁-C₂₄-Alkohole, an C₆-C₁₈-Alkylphenole oder an C₈-C₂₄-Alkylamine; und gegebenenfalls ein oder mehrere Polyole.

8. Dispersion nach einem oder mehreren der Ansprüche 1 bis 7, **dadurch gekennzeichnet, dass** das Dispergiermittel einer oder mehrerer Verbindungen der Formel (2) entspricht, 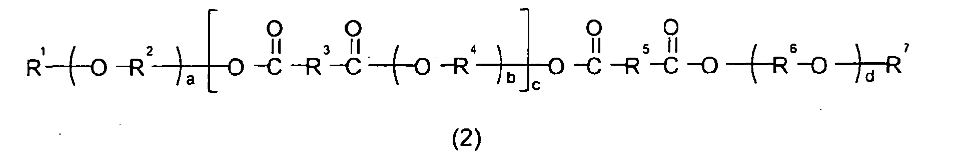 worin
R¹ und R⁷ ein linearer oder verzweigter-C₁-C₁₈-Alkylrest bedeutet, R², R⁴, R⁶ unabhängig voneinander (C₁-C₈)-Alkylen,
R³ und R⁵ Arylen oder Alkarylen,
a, b und d eine Zahl zwischen 1 und 200 ist, wobei die Summe von a, b und d mindestens 5 ist,
c eine Zahl zwischen 1 und 20 ist.

9. Dispersion nach Anspruch 8, **dadurch gekennzeichnet, dass** R¹ und R⁷ Methyl und/oder Ethyl,
R², R⁴, R⁶ Ethylen, 1,2-Propylen, 2,3-Propylen oder deren Gemische,
R³ und R⁵ 1,4-Phenylen und 1,3-Phenylen ,
a, b und d eine Zahl zwischen 1 und 100, wobei die Summe von a, b und d
mindestens 5 ist;
c eine Zahl zwischen 1 und 10
bedeuten.

10. Dispersion nach einem oder mehreren der Ansprüche 1 bis 9, enthaltend 5 bis 50 Gew.-% eines Flammschutzmittels gemäß (a); 0,3 bis 20 Gew.-% an Dispergiermittel gemäß (b) gegebenenfalls in Kombination mit 0,01 bis 5 Gew.-% eines Dialkylsulfosuccinats, 0 bis 15 Gew.-% Retentionsmittel gemäß (c), Rest Wasser, jeweils bezogen auf das Gesamtgewicht der Dispersion.

11. Dispersion nach einem oder mehreren der Ansprüche 1 bis 10, enthaltend
a) 5 bis 50 Gew.-% Flammschutzmittel der Formel (I),
b1) 1 bis 15 Gew.-% eines Dispergiermittels aus der Gruppe der Rizinusölalkoxylester und Ricinolsäurealkoxylester, oder
b2) 1 bis 15 Gew.-% eines Dispergiermittels aus der Gruppe der nichtionischen
Oligo- oder Polyester aus aromatischen Dicarbonsäuren, C₂-C₈-Alkylendiolen und Poly(C₁-C₄-alkylen)glykolen und/oder Methylpoly(C₂-C₄-alkylen)glykolen, gegebenenfalls in Kombination mit 0,05 bis 3 Gew.-% eines Dialkylsulfosuccinats,
c) 0 bis 15 Gew.-% eines Retentionsmittels,
d) 5 bis 80 Gew.-% Wasser,
e) 0 bis 10 Gew.-% weiterer üblicher Zusatzstoffe,
jeweils bezogen auf das Gesamtgewicht der Dispersion.

12. Verfahren zur Herstellung einer Dispersion nach einem oder mehreren der Ansprüche 1 bis 11, **dadurch gekennzeichnet, dass** man das Flammschutzmittel (a) zusammen mit dem Dispergiermittel (b) und gegebenenfalls den Komponenten (c), (e) und (f) mit Hilfe eines Dispergieraggregates in Gegenwart von Wasser fein verteilt.

13. Verwendung einer Dispersion nach einem oder mehreren der Ansprüche 1 bis 11 zur Masseflammschutzausrüstung oder Oberflächenbehandlung von cellulosischen Materialien, wie Stapelfasern, Filamenten, Monofilen, Non wovens, Wursthüllen, Cellophan, Kombinationen aus cellulosischen und/oder tierischen, pflanzlichen und/oder synthetischen Fasern, sowie pflanzlichen, tierischen oder synthetischen Fasern.

14. Verwendung nach Anspruch 13 zum Ausrüsten von Celluloseregenerat und Celluloseacetat.

## Claims

1. An aqueous dispersion containing
a) a flame retardant of the general formula (I) 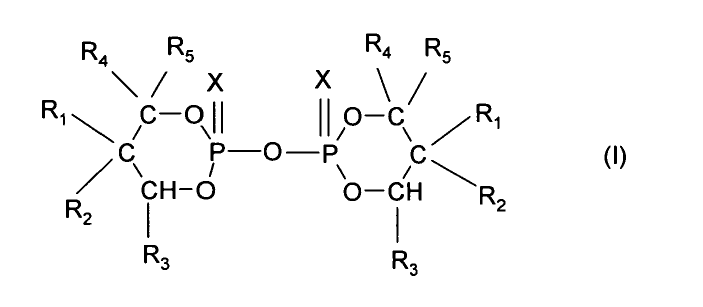 where
R₁ is hydrogen, C₁₋₄-alkyl, -CH₂Cl, -CH₂Br, -CH₂O-C₁₋₄-alkyl or phenyl,
R₂ is hydrogen, C₁₋₄-alkyl, -CH₂Cl, -CH₂Br or -CH₂O-C₁₋₄-alkyl, or R₁ and R₂ combine with the connecting ring carbon atom to form cyclohexylidene, cyclohexenylidene or 3,4-dibromocyclohexylidene, R₃ and R₅ are independently hydrogen or C₁₋₄-alkyl,
R₄ is hydrogen or methyl, and
X is oxygen or sulfur,
b) a dispersant from the group of the castor oil alkoxyl esters, ricinoleic acid alkoxyl esters, of the nonionic oligo- or polyesters of aromatic dicarboxylic acids, C₂-C₈-alkylenediols and poly(C₁-C₄-alkylene) glycols and/or methylpoly(C₂-C₄-alkylene) glycols, or of a combination of these nonionic oligo- or polyesters with dialkyl sulfosuccinates
and
c) if appropriate a retention agent.

2. The dispersion according to claim 1 wherein the R₁ radicals are methyl, ethyl, propyl, chloromethyl, bromomethyl or phenyl.

3. The dispersion according to claim 1 or 2 wherein the R₂ radicals are methyl, ethyl, propyl, chloromethyl or bromomethyl.

4. The dispersion according to one or more of claims 1 to 3 wherein the
flame retardant conforms to the formula (Ia)

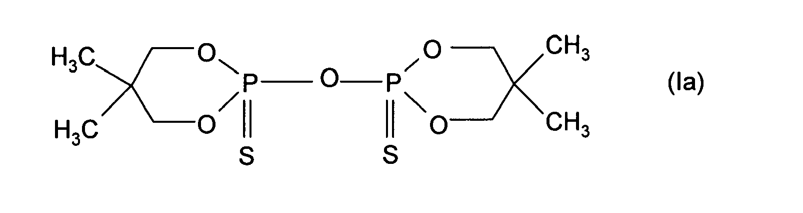

5. The dispersion according to one or more of claims 1 to 4 wherein the dispersant is a castor oil alkoxyl ester or ricinoleic acid alkoxyl ester containing 1 to 100 alkoxy radicals from the group consisting of ethoxy, 1,2-propoxy and 2,3-propoxy.

6. The dispersion according to claim 5 wherein the castor oil alkoxyl ester or ricinoleic acid alkoxyl ester is esterified with an acid radical from the group of the resin acids, C₂-C₁₂-dicarboxylic acids, C₂-C₁₂-sulfodicarboxylic acids or fatty acids.

7. The dispersion according to one or more of claims 1 to 5 wherein the dispersant from the group of the nonionic oligo- or polyesters is obtainable by polycondensation of dicarboxylic acid and glycol components comprising one or more aromatic dicarboxylic acids, esters or anhydrides;
C₂-C₈-alkylenediols; poly(C₁-C₄-alkylene) glycols and/or methylpoly(C₂-C₄-alkylene) glycols; if appropriate water-soluble addition products of alkylene oxide onto C₁-C₂₄-alcohols, onto C₆-C₁₈-alkylphenols or onto C₈-C₂₄-alkylamines; and if appropriate one or more polyols.

8. The dispersion according to one or more of claims 1 to 7 wherein the dispersant corresponds to one or more compounds of the formula (2) 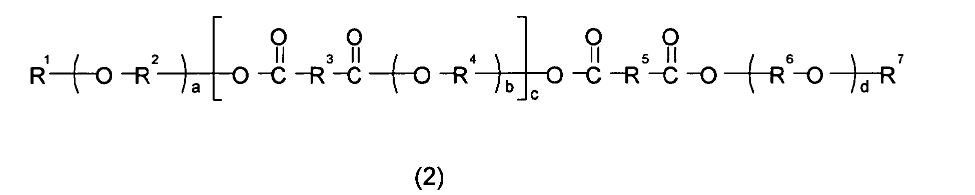 where
R¹ and R⁷ are a linear or branched C₁-C₁₈-alkyl radical,
R², R⁴, R⁶ are independently (C₁-C₈)-alkylene,
R³ and R⁵ are arylene or alkarylene,
a, b and d is a number between 1 and 200 subject to the proviso that the sum total of a, b and d is at least 5,
c is a number between 1 and 20.

9. The dispersion according to claim 8 wherein
R¹ and R⁷ are methyl and/or ethyl,
R², R⁴, R⁶ are ethylene, 1,2-propylene, 2,3-propylene or mixtures thereof,
R³ and R⁵ are 1,4-phenylene and 1,3-phenylene,
a, b and d are a number between 1 and 100 subject
to the proviso that the sum total of a, b and d is at least 5;
c is a number between 1 and 10.

10. The dispersion according to one or more of claims 1 to 9, containing 5% to 50% by weight of a flame retardant according to (a); 0.3% to 20% by weight of dispersant according to (b) if appropriate in combination with 0.01% to 5% by weight of a dialkyl sulfosuccinate, 0% to 15% by weight of retention agent according to (c), balance water, all based on the total weight of the dispersion.

11. The dispersion according to one or more of claims 1 to 10, containing
a) 5% to 50% by weight of flame retardant of the formula (I),
b1) 1% to 15% by weight of a dispersant from the group of the castor oil alkoxyl esters and ricinoleic acid alkoxyl esters, or
b2) 1 % to 15% by weight of a dispersant from the group of the nonionic oligo- or polyesters of aromatic dicarboxylic acids, C₂-C₈-alkylenediols and poly(C₁-C₄-alkylene) glycols and/or methylpoly(C₂-C₄-alkylene) glycols, if appropriate in combination with 0.05% to 3% by weight of a dialkyl sulfosuccinate,
c) 0% to 15% by weight of a retention agent,
d) 5% to 80% by weight of water,
e) 0% to 10% by weight of further customary additives, all based on the total weight of the dispersion.

12. A process for producing a dispersion according to one or more of claims 1 to 11, which comprises finely dispersing the flame retardant (a) together with the dispersant (b) and if appropriate the components (c), (e) and (f) in water by means of a dispersing assembly.

13. A use of a dispersion according to one or more of claims 1 to 11 for bulk flame retardant finishing or surface treatment of cellulosic materials, such as staple fibers, filaments, monofils, non wovens, sausage casings, cellophane, combinations of cellulosic and/or animal, vegetable and/or synthetic fibers, and also vegetable, animal or synthetic fibers.

14. The use according to claim 13 for finishing regenerated cellulose and cellulose acetate.

## Revendications

1. Dispersion aqueuse, contenant :
a) un agent ignifuge de formule générale (I) 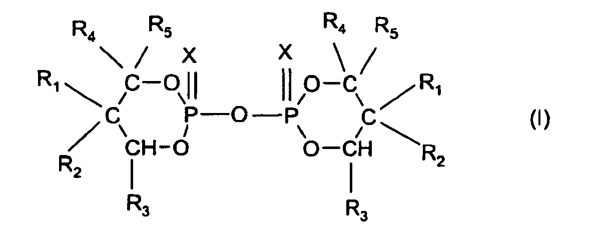 où
R₁ signifie hydrogène, C₁₋₄-alkyle, -CH₂Cl, -CH₂Br, - CH₂O-C₁₋₄-alkyle ou phényle,
R₂ signifie hydrogène, C₁₋₄-alkyle, -CH₂Cl, -CH₂Br ou - CH₂O-C₁₋₄-alkyle, ou
R₁ et R₂ signifient, ensemble avec l'atome de carbone auquel ils sont liés, cyclohexylidène, cyclohexénylidène ou 3,4-dibromocyclohexylidène,
R₃ et R₅ signifient, indépendamment l'un de l'autre, hydrogène ou C₁₋₄-alkyle,
R₄ signifie hydrogène ou méthyle et
X signifie oxygène ou azote,
b) un dispersant du groupe constitué par les esters alcoxyliques de l'huile de ricin, les esters alcoxyliques de l'acide ricinoléique, les oligoesters ou les polyesters non ioniques d'acides dicarboxyliques aromatiques, les C₂-C₈-alkylènediols et les poly(C₁-C₄-alkylène)glycols et/ou les méthylpoly(C₂-C₄-alkylène)glycols, ou une combinaison de ces oligoesters ou polyesters non ioniques avec des dialkylsulfosuccinates
et
c) le cas échéant un agent de rétention.

2. Dispersion selon la revendication 1, **caractérisée en ce que** les radicaux R₁ signifient méthyle, éthyle, propyle, chlorométhyle, bromométhyle ou phényle.

3. Dispersion selon la revendication 1 ou 2, **caractérisée en ce que** les radicaux R₂ signifient méthyle, éthyle, propyle, chlorométhyle ou bromométhyle.

4. Dispersion selon l'une ou plusieurs des revendications 1 à 3, **caractérisée en ce que** l'agent ignifuge correspond à la formule (Ia)

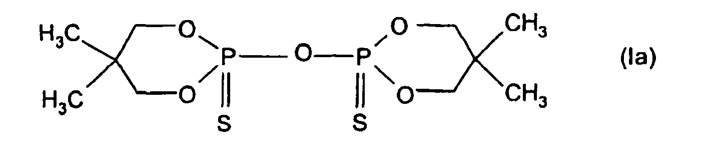

5. Dispersion selon l'une ou plusieurs des revendications 1 à 4, **caractérisée en ce que** le dispersant est un ester alcoxylique de l'huile de ricin ou un ester alcoxylique de l'acide ricinoléique, qui contient 1 à 100 radicaux alcoxy du groupe éthoxy, 1,2-propoxy et 2,3-propoxy.

6. Dispersion selon la revendication 5, **caractérisée en ce que** l'ester alcoxylique de l'huile de ricin ou l'ester alcoxylique de l'acide ricinoléique est estérifié avec un radical acide du groupe des acides résiniques, des acides C₂-C₁₂-dicarboxyliques, des acides C₂-C₁₂-sulfodicarboxyliques ou des acides gras.

7. Dispersion selon l'une ou plusieurs des revendications 1 à 5, **caractérisée en ce que** le dispersant du groupe des oligoesters ou des polyesters non ioniques peut être obtenu par polycondensation de composants de type acide dicarboxylique et glycol, comprenant un ou plusieurs acides dicarboxyliques aromatiques, leurs esters ou leurs anhydrides ;
les C₂-C₈-alkylènediols ; les poly(C₁-C₄-alkylène)glycols et/ou les méthylpoly(C₂-C₄-alkylène)glycols ; les produits d'addition, le cas échéant solubles dans l'eau, d'oxyde d'alkylène sur des alcools en C₁-C₂₄, sur des alkylphénols en C₆-C₁₈ ou sur des C₈-C₂₄-alkylamines ; et le cas échéant un ou plusieurs polyols.

8. Dispersion selon l'une ou plusieurs des revendications 1 à 7, **caractérisée en ce que** le dispersant correspond à un ou plusieurs composés de formule (2), 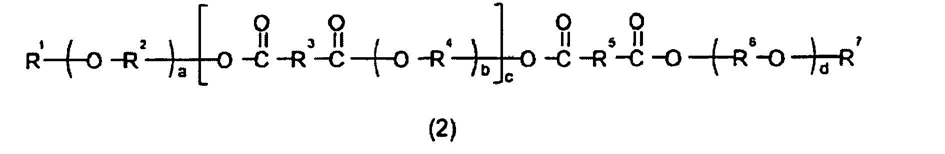 où
R¹ et R⁷ signifient un radical C₁-C₁₈-alkyle, linéaire ou ramifié,
R² , R⁴, R⁶ signifient, indépendamment l'un de l'autre, (C₁-C₈)-alkylène,
R³ et R⁵ signifient arylène ou alkarylène,
a, b et d représentent un nombre entre 1 et 200, où la somme de a, b et d est d'au moins 5,
c représente un nombre entre 1 et 20

9. Dispersion selon la revendication 8, **caractérisée en ce que**
R¹ et R⁷ signifient méthyle et/ou éthyle, R², R⁴, R⁶ signifient éthylène, 1,2-propylène, 2,3-propylène ou leurs mélanges,
R³ et R⁵ signifient 1,4-phénylène et 1,3-phénylène, a, b et d représentent un nombre entre 1 et 100, où la
somme de a, b et d est d'au moins 5 ;
c représente un nombre entre 1 et 10.

10. Dispersion selon l'une ou plusieurs des revendications 1 à 9, contenant 5 à 50% en poids d'un agent ignifuge selon (a) ; 0,3 à 20% en poids de dispersant selon (b), le cas échéant en combinaison avec 0,01 à 5% en poids d'un dialkylsulfosuccinate, 0 à 15% en poids d'un agent de rétention selon (c), pour le reste de l'eau, à chaque fois par rapport au poids total de la dispersion.

11. Dispersion selon l'une ou plusieurs des revendications 1 à 10, contenant
a) 5 à 50% en poids d'agent ignifuge de formule (I),
b1) 1 à 15% en poids d'un dispersant du groupe des esters alcoxyliques de l'huile de ricin et des esters alcoxyliques de l'acide ricinoléique, ou
b2) 1 à 15% en poids d'un dispersant du groupe des oligoesters ou des polyesters non ioniques d'acides dicarboxyliques aromatiques, de C₂-C₈-alkylènediols et de poly(C₁-C₄-alkylène)glycols et/ou de méthylpoly(C₂-C₄-alkylène)glycols, le cas échéant en combinaison avec 0,05 à 3% en poids d'un dialkylsulfosuccinate,
c) 0 à 15% en poids d'un agent de rétention,
d) 5 à 80% en poids d'eau,
e) 0 à 10% en poids d'autres additifs usuels, dans chaque cas par rapport au poids total de la dispersion.

12. Procédé pour la préparation d'une dispersion selon l'une ou plusieurs des revendications 1 à 11, **caractérisé en ce qu'**on répartit finement l'agent ignifuge (a) ensemble avec le dispersant (b) et le cas échéant les composants (c), (e) et/ou (f) à l'aide d'un appareil de dispersion en présence d'eau.

13. Utilisation d'une dispersion selon l'une ou plusieurs des revendications 1 à 11 pour l'apprêt ignifuge dans la masse ou un traitement de surface de matériaux cellulosiques, tels que les fibres discontinues, les filaments, les monofilaments, les non-tissés, les boyaux, le cellophane, les combinaisons de fibres cellulosiques et/ou animales, végétales et/ou synthétiques, ainsi que les fibres végétales, animales ou synthétiques.

14. Utilisation selon la revendication 13 pour l'apprêt d'un produit régénéré à base de cellulose et d'acétate de cellulose.
